# EUROPÄISCHE PATENTSCHRIFT

(11) **EP 0 492 352 B1**
(45) Veröffentlichungstag und Bekanntmachung des Hinweises auf die Patenterteilung: **24.07.1996**
(21) Anmeldenummer: 91121561.4
(22) Anmeldetag: 17.12.1991
(51) Int. Cl.: G01S 3/781, G02B 3/02, B60H 1/00

(54) **Sonnensensor für Innenraumtemperaturregeleinrichtungen in Kraftfahrzeugen**
Sun sensor for internal temperature control systems in vehicles
Capteur de radiation solaire pour appareils de commande de température intérieure de véhicules

(30) Priorität: 24.12.1990 DE 4041770
(43) Veröffentlichungstag der Anmeldung: 01.07.1992
(73) Patentinhaber: Hella KG Hueck & Co., 59552 Lippstadt (DE)
(72) Erfinder: Struck, Jürgen, W-4780 Lippstadt-Lipperode (DE); Wöhler, Jürgen, W-4780 Lippstadt 4 (DE)

(56) Entgegenhaltungen:
- WO-A-90/07102
- PATENT ABSTRACTS OF JAPAN vol. 013, no. 385 (M-864)21. November 1987& JP-A-11 36 812 (DIESEL KIKI).
- PATENT ABSTRACTS OF JAPAN vol. 013, no. 385 (M-864)25. August 1989 & JP-A-11 36 811 (DIESEL KIKI).

## Beschreibung

Die Erfindung betrifft einen Sonnensensor für Innenraumtemperaturregeleinrichtungen in Kraftfahrzeugen, mit einem elektro-optischen Wandler, der eine lichtempfindliche Fläche aufweist.

Aus der internationalen Patentanmeldung WO-A-90/07102 ist ein Sonnensensor für Innenraumtemperaturregeleinrichtungen in Kraftfahrzeugen bekannt, der mindestens einen elektro-optischen Wandler mit mindestens einer lichtempfindlichen Fläche aufweist. Der Sensor verfügt über Befestigungselemente zur Montage mit dem Kraftfahrzeug.

Die Montage und der Anschluß des Sonnensensors an eine Innenraumtemperaturregeleinrichtung erweist sich dabei als besonders schwierig.

Der Erfindung liegt daher die Aufgabe zugrunde, einen Sonnensensor zu schaffen, der einen einfachen Aufbau aufweist und der einfach und kostengünstig herstellbar und montierbar ist.

Die Aufgabe wird erfindungsgemäß durch die Merkmale des Anspruchs 1 gelöst.

Es ist von Vorteil, daß die Linse Teil eines Gehäuses ist und daß das Gehäuse aus einem lichtdurchlässigen Material besteht, weil sich somit neben einem besonders einfachen Aufbau des Sonnensensors eine besonders einfache und kostengünstige Herstellbarkeit des Sonnensensors ergibt, da Gehäuse und Linse einfach und kostengünstig aus einem Teil Kunststoff oder Glas bestehen können, das Lichtdurchlässig ist, wodurch die Anzahl der herzustellenden und zu montierenden Teile herabgesetzt wird.

In diesem Zusammenhang ist es besonders vorteilhaft, daß das Gehäuse erste Befestigungselemente aufweist und daß eine elektrische Leiterplatte, auf der der elektro-optische Wandler montiert ist, und die einen elektrischen und/oder elektronischen Schaltkreis aufweist, über die ersten Befestigungselemente mit dem Gehäuse verbunden ist, weil somit zum einen gewährleistet wird, daß der elektro-optische Wandler lagerichtig und unverrückbar zu der Linse in deren Fortsatz angeordnet ist und zum anderen an dem Ausgang des Sonnensensors ein elektrisches Signal anliegt, das direkt von einer Innenraumtemperaturregeleinrichtung in Kraftfahrzeugen auswertbar ist.

Dadurch, daß ein Deckel das Gehäuse abschließt, ergibt sich der Vorteil, eines besonders einfachen und kostengünstigen Aufbaus des Sonnensensors, da dieser, bestehend aus dem Gehäuse mit der Linse, der Leiterplatte und dem Deckel eine einfach und kostengünstig herstellbare und zu montierende Einheit bildet.

Es ist von Vorteil, daß das Gehäuse und/oder der Deckel zweite Befestigungselemente aufweisen, und daß eine Abdeckung über die zweiten Befestigungselemente mit dem Sonnensensor verbunden ist, weil der Sonnensensor somit als Einheit einfach und kostengünstig lagefest mit einer Abdeckung des Kraftfahrzeuges, z. B. im Bereich des Armaturenbrettes, verbindbar ist.

In diesem Zusammenhang erweist sich als besonders vorteilhaft, daß der die Linse bildende Teil des Gehäuses aus der Abdeckung um einen vorgegebenen Betrag herausragt, weil somit je nach der Anordnung des Gehäuses, der Anordnung und der Dicke der Abdeckung und des Ortes des Einbaus des Sonnensensors sichergestellt ist, daß der gewünschte Winkelbereich für das zu detektierende Sonnenlicht nicht eingeschränkt wird.

Es ist vorteilhaft, daß der elektro-optische Wandler eine Fotodiode ist und daß der Schaltkreis ein Strom-Spannungswandler ist, weil somit einfach und kostengünstig aus dem Fotostrom der Fotodiode ein Spannungssignal gebildet wird, das z. B. von einem Microrechner einer Innenraumtemperaturregeleinrichtung in Kraftfahrzeugen direkt verarbeitbar ist.

In diesem Zusammenhang ist es vorteilhaft, wenn der Schaltkreis einen Analog/Digital-Wandler enthält, weil somit einem Microrechner einer Innenraumtemperaturregeleinrichtung das Signal des Sonnensensors in digitaler Form zur direkten Verarbeitung über ein Anschlußkabel zugeführt werden kann.

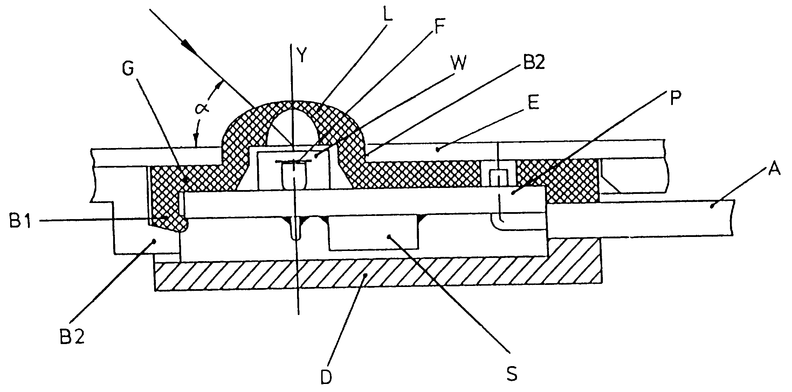

Ein Ausführungsbeispiel der Erfindung ist in der einzigen Zeichnung dargestellt und wird im folgenden anhand der Zeichnungen näher erläutert.

Die einzige Zeichnung zeigt einen Schnitt durch einen erfindungsgemäßen Sonnensensor.

Der Sonnensensor weist ein Gehäuse (G) auf, das hier einstückig mit einer Linse (L) verbunden ist und aus lichtdurchlässigem Kunststoff oder Glas besteht. Die Linse (L) ragt hier kuppelförmig aus dem Gehäuse (G) hervor und weist beispielhaft eine Linsengeometrie auf, deren Außenseite durch die Form einer Ellipse bestimmt ist und deren Innenseite durch einen ellipsoidförmigen Hohlraum bestimmt ist. In der Zeichnung ist ein Lichteinfallswinkel (α) beispielhaft eingezeichnet.

Der Linse (L) des Gehäuses (G) ist ein elektro-optischer Wandler (W) zugeordnet, der eine Lichtempfindliche Fläche (F) aufweist. Beispielhaft erfolgt die Zuordnung und lagesichere Anordnung des elektro-optischen Wandlers (W) hier, indem der elektro-optischen Wandler (W) auf einer Leiterplatte (P) fest montiert ist, die über erste Befestigungselemente (B1) lagerichtig und sicher mit dem Gehäuse (G) verbunden ist. Der elektro-optische Wandler (W) ragt dabei in einen Fortsatz der Linse (L) des Gehäuses (G).

Die Leiterplatte (P) weist bei dem hier gezeigten Ausführungsbeispiel einen elektrischen und/oder elektronischen Schaltkreis (S) auf, von dem hier nur ein Teil gezeigt ist und der z. B. einen Strom/Spannungswandler enthalten kann, der aus dem Strom von z. B. einer verwendeten Fotodiode, die als elektro-optischer Wandler (W) verwendet wird, eine Spannung erzeugt, die von einer Innenraumtemperaturregeleinrichtung in dem Kraftfahrzeug als Regelgröße verarbeitet werden kann. Der Schaltkreis kann zudem auch einen Analog/Digital-Wandler aufweisen, so daß der Innenraumtemperaturregeleinrichtung, die hier nicht gezeigt ist, und über ein Anschlußkabel (A), das mit der Leiterplatte verbunden ist, an den Schaltkreis (S) angeschlossen ist, ein digitales Signal zugeführt wird, das der Sonneneinstrahlung entspricht.

Für eine einfache und kostengünstige Herstellbarkeit und Montierbarkeit weint der Sonnensensor bei dem hier gezeigten Ausführungsbeispiel einen Deckel (D) auf, der das Gehäuse (G) abschließt. Der Sonnensensor bildet somit eine Einheit, die aus dem Gehäuse (G) der Leiterplatte (P) und dem Deckel (D) besteht und die einfach über hier beispielhaft gezeigte zweite Befestigungselemente (B2) mit einer Abdeckung (E) verbindbar ist, die ein Teil des Kraftfahrzeuges ist. Die zweiten Befestigungselemente (B2) können dabei Teil des Deckels und/oder des Gehäuses (G) sein, je nachdem wie der Sonnensensor, die Abdeckung (E) oder der Einbauort für den Sonnensensor gestaltet ist.

Je nach dem Einbauort des Sonnensensors, der Dicke und Art der Abdeckung (E), der Anordnung der Lichtempfindlichen Fläche (F) des elektro-optischen Wandlers (W), der möglicherweise vorhandenen Symmetrieachse (Y), der Linse (L) und deren Lage und dem gewünschten zu detektierenden Bereich für den Lichteinfallswinkel (α) ragt die Linse (L) des Gehäuses (G) aus diesem um einen vorbestimmten Betrag heraus, wobei der Betrag dadurch bestimmt ist, daß der Lichteinfall auf die Linse (L) in Abhängigkeit von den vorgenannten Bedingungen nicht eingeschränkt wird.

Je nach Einbauort des Sonnensensors kann sich die Form des Gehäuses, der Linse und insbesondere der Linsengeometrie von dem hier gezeigten Ausführungsbeispiel unterscheiden, deren Innenseite durch einen ellipsoidförmigen Hohlraum bestimmt ist.

### Bezugszeichenliste

- A: Anschlußkabel
- B1: erste Befestigungselemente
- B2: zweite Befestigungselemente
- D: Deckel
- E: Abdeckung
- F: lichtempfindliche Fläche
- G: Gehäuse
- L: Linse
- P: Leiterplatte
- S: Schaltkreis
- W: elektro-optischer Wandler
- Y: Symmetrieachse
- α: Lichteinfallswinkel

## Patentansprüche

1. Sonnensensor für Innenraumtemperaturregeleinrichtungen in Kraftfahrzeugen, mit einem elektro-optischen Wandler (W), der eine lichtempfindliche Fläche (F) aufweist, dadurch gekennzeichnet, daß der Sonnensensor eine Linse (L) aufweist, daß die Linse (L) Teil eines Gehäuses (G) ist und daß das Gehäuse (G) aus einem lichtdurchlässigen Material besteht.

2. Sonnensensor nach Anspruch 1, dadurch gekennzeichnet, daß das Gehäuse (G) erste Befestigungselemente (B1) aufweist und daß eine elektrische Leiterplatte (P), auf der der elektro-optische Wandler montiert ist und die einen elektrischen und/oder elektronischen Schaltkreis (S) aufweist, über die ersten Befestigungselemente (B1) mit dem Gehäuse (G) verbunden ist.

3. Sonnensensor nach Anspruch 2, dadurch gekennzeichnet, daß ein Deckel (D) das Gehäuse (G) abschließt.

4. Sonnensensor nach Anspruch 3, dadurch gekennzeichnet, daß das Gehäuse (G) und/oder der Deckel (D) zweite Befestigungselemente (B2) aufweisen und daß eine Abdeckung (E) über die zweiten Befestigungselemente (B2) mit dem Sonnensensor verbunden ist.

5. Sonnensensor nach Anspruch 4, dadurch gekennzeichnet, daß der die Linse (L) bildende Teil des Gehäuses (G) aus der Abdeckung (E) um einen vorgegebenen Betrag herausragt.

6. Sonnensensor nach mindestens einem der vorstehenden Ansprüche, dadurch gekennzeichnet, daß der elektro-optische Wandler (W) eine Fotodiode ist, und daß der Schaltkreis (S) ein Strom/Spannungswandler ist.

7. Sonnensensor nach Anspruch 6, dadurch gekennzeichnet, daß der Schaltkreis (S) einen Analog/Digital-Wandler enthält.

## Claims

1. Sun sensor for installations for temperature control of the interior of motor vehicles, provided with an electro optical transducer (W) which has a light sensitive surface (F), characterised in that the sun sensor has a lens (L), that the lens (L) forms part of a housing (G) and that the housing (G) consists of a light transmitting substance.

2. Sun sensor according to claim 1, characterised in that the housing (G) has first fixing elements (B1) and that an electrical printed circuit board (P) is connected to the housing (G) via the first fixing elements (B1), the printed circuit board (P) having the electro optical transducer (W) mounted upon it and having an electrical and/or electronic switching circuit (S).

3. Sun sensor according to claim 2, characterised in that a lid (D) closes the housing (G).

4. Sun sensor according to claim 3, characterised in that the housing (G) and/or the lid (D) have second fixing elements (B2) and that a covering (E) is connected to the sun sensor via the second fixing elements (B2.)

5. Sun sensor according to claim 4, characterised in that the part of the housing (G) which forms the lens (L) projects from the covering (E) by a predetermined amount.

6. Sun sensor according to at least one of the preceding claims, characterised in that the electro optical transducer (W) is a photo diode and that the switching circuit (S) is a current to voltage converter.

7. Sun sensor according to claim 6, characterised in that the switching circuit (S) includes an analogue to digital converter.

## Revendications

1. Capteur solaire pour des dispositifs de régulation de la température intérieure dans des véhicules automobiles, comportant un convertisseur électro-optique (W) qui présente une surface (F) sensible à la lumière, caractérisé en ce que le capteur solaire présente une lentille (L), en ce que la lentille (L) fait partie d'un boîtier (G), et en ce que le boîtier (G) est constitué en un matériau translucide.

2. Capteur solaire selon la revendication 1, caractérisé en ce que le boîtier (G) présente des premiers éléments de fixations (B1), et en ce qu'une carte à circuit imprimé électrique (P) sur laquelle est monté le convertisseur électro-optique et qui présente un circuit de commutation électrique et/ou électronique (S), est reliée au boîtier (G) via les premiers éléments de fixation (B1).

3. Capteur solaire selon la revendication 2, caractérisé en ce qu'un couvercle (D) referme le boîtier (G).

4. Capteur solaire selon la revendication 3, caractérisé en ce que le boîtier (G) et/ou le couvercle (D) présentent des seconds éléments de fixation (B2), et en ce qu'un habillage (E) est relié au capteur solaire via les seconds éléments de fixation (B2).

5. Capteur solaire selon la revendication 4, caractérisé en ce que la partie du boîtier (G) qui forme la lentille (L) dépasse d'une valeur prédéterminée hors de l'habillage (E).

6. Capteur solaire selon l'une au moins des revendications précédentes, caractérisé en ce que le convertisseur électro-optique (W) est une photodiode, et en ce que le circuit de commutation (S) est un convertisseur courant/tension.

7. Capteur solaire selon la revendication 6, caractérisé en ce que le circuit de commutation (S) comporte un convertisseur analogique/ numérique.
